Europäisches Patentamt

European Patent Office

Office européen des brevets

(19)

(11) Publication number: 0 351 757 A2

# EUROPEAN PATENT APPLICATION

(21) Application number: 89113080.9

(22) Date of filing: 17.07.89

(51) Int. Cl.⁴: H04M 3/56 , H04N 7/15

(30) Priority: 18.07.88 JP 176909/88

(43) Date of publication of application:
24.01.90 Bulletin 90/04

(84) Designated Contracting States:
DE GB

(71) Applicant: HITACHI, LTD.
6, Kanda Surugadai 4-chome Chiyoda-ku
Tokyo(JP)

(72) Inventor: Tanabe, Shiro
Hitachi Koyasudai Apartment A-103
32 Koyasumachi-2-chome Hachioji-shi(JP)
Inventor: Nakano, Yukio
Hitachi Owada Apartment D-302
47-1 Akatsukicho-1-chome Hachioji-shi(JP)
Inventor: Baji, Toru
Miharashinoie C-608 2 Koyodai-4-chome
Inagi-shi(JP)
Inventor: Maeda, Minoru
2196-31, Hirai Hinodemachi
Nishitama-gun Tokyo(JP)
Inventor: Takahashi, Kenji
2648-17, Kawashiri Shiroyamamachi
Tsukui-gun Kanagawa-ken(JP)
Inventor: Tanaka, Kiyoshi
19-8-A502, Asahigaoka-2-chome
Hino-shi(JP)

(74) Representative: Strehl, Schübel-Hopf,
Groening
Maximilianstrasse 54 Postfach 22 14 55
D-8000 München 22(DE)

(54) Method of video conference, video conference terminal, method of informing and data terminal.

(57) In a video conference terminal (1-6), a control unit for controlling signals received from a plurality of conference networks comprises a circuit 22) for combining video signals supplied from the conferences, a video switching circuit (22) for selecting a video signal of one conference, a circuit (27) for combining audio signals supplied from the conferences, an audio switching circuit (27) for selecting an audio signal of one conference, a control circuit (30) for controlling connection in the network through a speech path, and a circuit for controlling interruption of conferences, consolidation of conferences and priority of conferences.

FIG 2

# METHOD OF VIDEO CONFERENCE, VIDEO CONFERENCE TERMINAL, METHOD OF INFORMING AND DATA TERMINAL

## BACKGROUND OF THE INVENTION

The present invention relates to a method of using a video conference network for effecting simultaneous communication conference among Video terminals at two or more places, and more particularly to a method of video conference in a network in which a plurality of conferences exist.

Prior art video conference systems are disclosed in JP-A-62-108689 and JP-A-62-108691 which relate to a star type network communication conference in which communication is effected among a plurality of conference terminals connected to a multi-point control unit, and in an article appeared in Multi-media and Distributed Processing 29-8 (1986) The Institute of Information Processing of Japan, pp 1-8, which relates to an electronic conference in which conference terminals, files and electronic blackboard are connected to a LAN. Those relate to a method for constructing a conference network. In those communication conferences, travel time and expense can be saved because the conference is done among distant places but all participants are bound by one conference during the conference as they are in a conventional conference. A ratio of conferences in business hours exceeds 50%. Some of the conferences may be of lower priority and some may be important but need only a little speech. If one can participate in a plurality of simultaneously occuring conferences, an efficiency in business will be remarkably improved.

In the prior art video conference system, the participants make the communication conference through one conference network. Thus, the participants are bound by the one conference during the conference.

## SUMMARY OF THE INVENTION

It is an object of the present invention to set a conference network to conform to a personal circumstance of each participant without binding the participant to a specific conference by selecting any one of a plurality of simultaneously occuring conferences, simultaneously participating to a plurality of conferences, making a personal conference with a specific person during a conference, or participating to a conference during data processing by a data terminal such as a work station.

The above object is achieved by providing a control unit in a video conference terminal for controlling signals received from a plurality of conference networks. The control unit comprises means for combining video signals coming from the respective conferences, video switching means for selecting one conference, means for combining audio signals coming from the respective conferences, audio switching means for selecting one conference, means for controlling the connection through a speech path, and means having functions of interruption control and consolidation control for a plurality of conferences and priority control of the conferences.

The video/audio switching circuit in the video conference terminal which receives the video and audio signals from the plurality of conferences can be connected to any conference for each medium and output the video and audio signals of the selected conference. The video combine circuit combines the compressed video signals of the respective conferences. The audio combine circuit combines the audio signals of the respective conferences so that one can simultaneously participate to a plurality of conferences through one terminal. A destination conference for the video and audio signals of the participant entered from the terminal are determined by signal modes (the operational status of the video and audio switching circuits and the combine circuits) respectively, which modes are outputted to the terminal by a processor in the terminal. By setting this rule in a data base, the participant may modify the rule from the terminal.

## BRIEF DESCRIPTION OF THE DRAWINGS

Fig. 1 shows a configuration of a video conference network in which a plurality of conferences exist, in accordance with one embodiment of the present invention;

Fig. 2 shows a functional block diagram of a video terminal to be connected to the conference network of Fig. 1;

Fig. 3 shows destinations of video and audio signals of participants entered to a terminal by a conference signal outputted to the terminal;

Fig. 4 shows an output mode chart for a source conference of a signal outputted to the terminal, which is on a main memory of the terminal;

Fig. 5 shows an input signal destination determination chart which is stored on the main memory as a data base;

Fig. 6 shows a configuration in accordance with another embodiment of the present invention, which realizes a video conference that permits participation to any conference through one terminal by switching a speech path in the network;

Fig. 7 shows a signal sequence when a connection request has been issued from a non-connected conference to a terminal;

Fig. 8 shows a signal flow based on an ISDN layer 3 used between the terminal and a processor;

Fig. 9 shows a flow chart of an interruption analysis program which is started when a connection request has been issued;

Fig. 10 shows a configuration when a plurality of conferences are consolidated to one conference;

Fig. 11 shows a configuration when an additional conference occurs during one conference; and

Fig. 12 shows a configuration of a work station terminal with a conference function which permits that video conference and data processing are carried out simultaneously.

## DESCRIPTION OF THE PREFERRED EMBODIMENTS

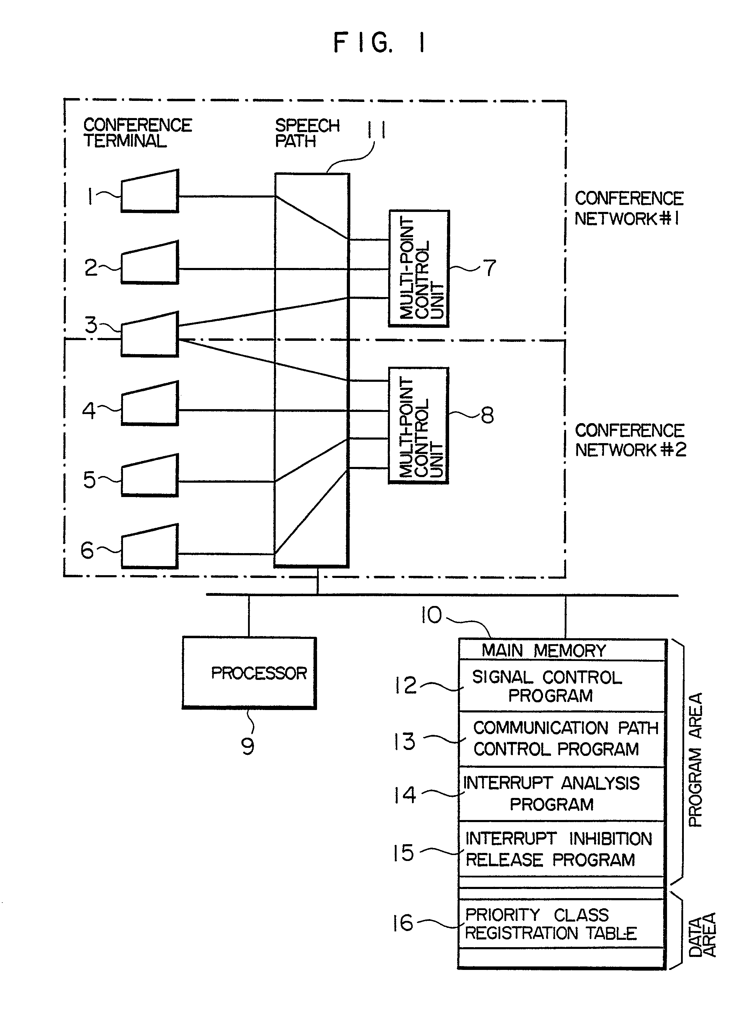

Fig. 1 shows a configuration of video conference networks, in which respective conference networks, that is, video conference terminals 1 - 3 and video conference terminals 3 - 6 form the conference networks through multi-point control units 7 and 8, respectively. (They are referred to as conference networks #1 and #2, respectively). Each of the multi-point control units 7 and 8 includes a circuit for compressing and combining the video signals from the conference terminals and a switching circuit for selecting a signal sent from any one of the terminals. As to the audio signals, it has a circuit to combine the signals sent from all terminals.

A speech path 11 in the network controls the connection between any terminal and any conference network by an instruction from a processor 9 and attains switching by the connection request, consolidation of a plurality of conferences and switching at the end of a conference.

The processor 9 also controls the transmission and reception of signals between the terminal and the network, controls the terminals and the hardware in the speech path, and controls the priority class to attain an application of a multi-conference system. A main memory 10 contains a signal control program 12 for controlling communication of signals between the terminals and the network, a speech path control program 13 for connecting and restoring a speech path, an interruption analysis program 14 for controlling a plurality of conferences and an interruption inhibit release monitoring program 15 in a program area, and a priority class registration table 16 to which the interruption analysis program 14 refers in a data area.

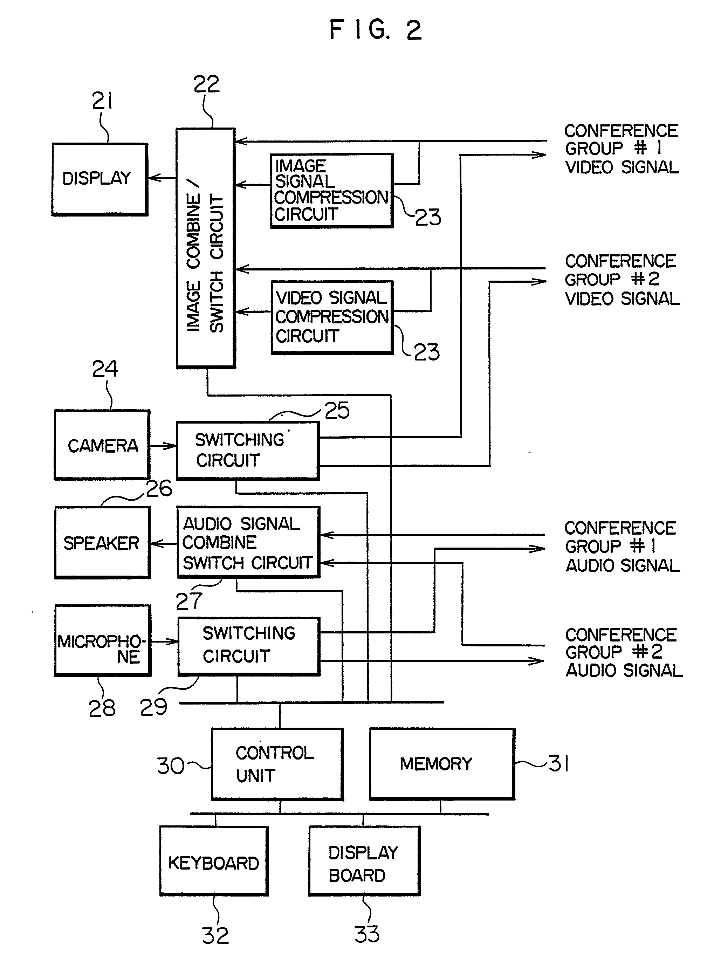

As shown in Fig. 1, the conference terminal 3 is connected to the two conference networks #1 and #2 (two-line connection). As shown in Fig. 2, it comprises a video output display 21, a video signal compression circuit 23, an image combine/switch circuit 22, a video signal input camera 24, a switching circuit 25, an audio output speaker 26, an audio signal combine/ switch circuit 27, an audio input microphone 28, a switching circuit 29, a keyboard 32, a display board 33, a control unit 30 and a memory 31. Regarding the signals outputted by the terminals, any conference network or a plurality of conference networks may be selected independently for each medium (video and audio) by user designation through the keyboard. The processes in the respective modes are explained below.

Video output signal

Multi-conference mode --- The video signals of the respective conference networks are supplied to the video signal compression circuit 23 and combined by the image combine circuit 22.

Single conference mode --- The video signal of any conference network is selected by the image switching circuit 22.

Audio output signal

Multi-conference mode --- The audio signals of the respective conference networks. are combined by the audio signal combine circuit 27.

Single conference mode --- The audio signal of any conference network is selected by the audio signal switching circuit 27.

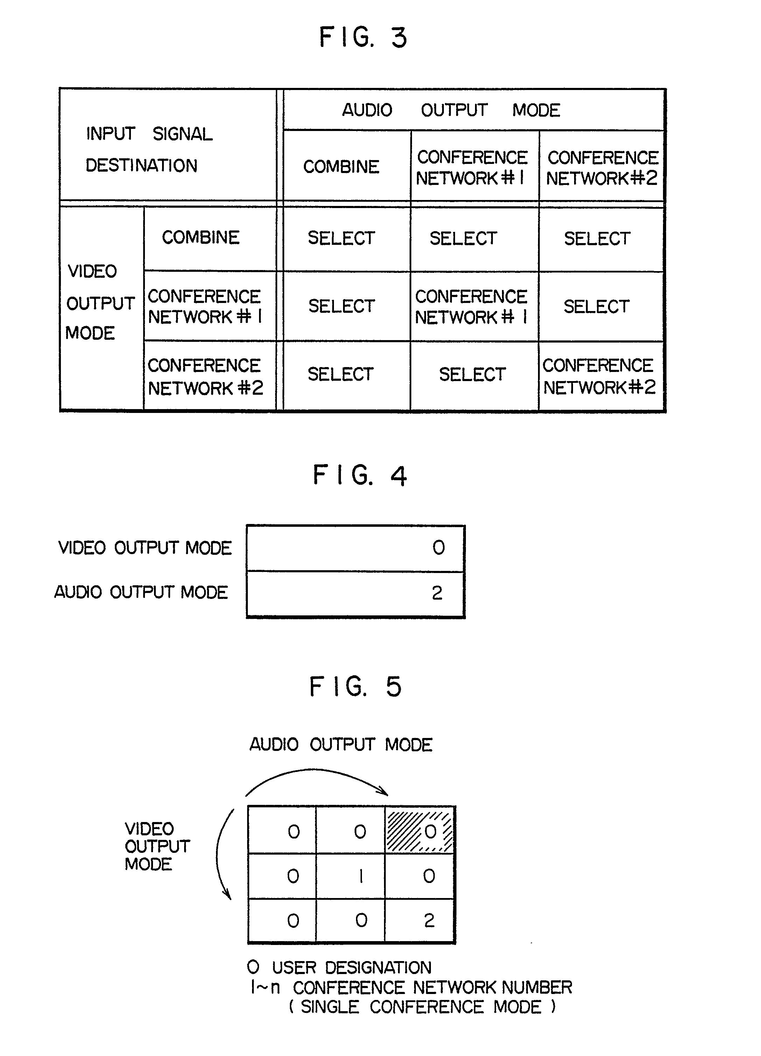

Each of the video and audio signal inputted from the terminal is sent to one of the conference networks in accordance with the selection mode for the output signal. An example of rule therefor is shown in Fig. 3. When the selection mode of the video signal and the selection mode of the audio signal select one conference network, respectively, and the selected conference networks are equal, the video and audio signals inputted to the terminals are automatically sent to that conference network. In other cases, the user manually selects the conference network. A terminal to which a plurality of conferences may be connected is predesignated, and an area (output mode table) for storing the output modes of the video and audio signal for that terminal are prepared in the memory 3 of the terminal of Fig. 2. For example, assuming that the output modes of the terminal 3 are the combination for the video output mode and the conference network #2 for the audio output mode, those modes are set in the output mode table as shown in Fig. 4, in which "0" indicates the combine mode and "1 ~ n" indicate the single conference mode and designate the conference network numbers. On the other hand, an input signal transmission destination determination table for determining the transmission destination of the input signal, which is set on the main memory of the terminal, as shown in Fig. 5 corresponds to Fig. 3. In the table, "0" is determined by the designation from the terminal and "1 ~ n" are automatically determined by the conference network. In the present example, the destination determination table of Fig. 5 is looked up by the video output mode "0" and the audio output mode "2", and the video and audio signals inputted from the terminal 3 have the terminal designation "0".

The input signal transmission destination determination table of Fig. 5 enables the user to update it from the terminal.

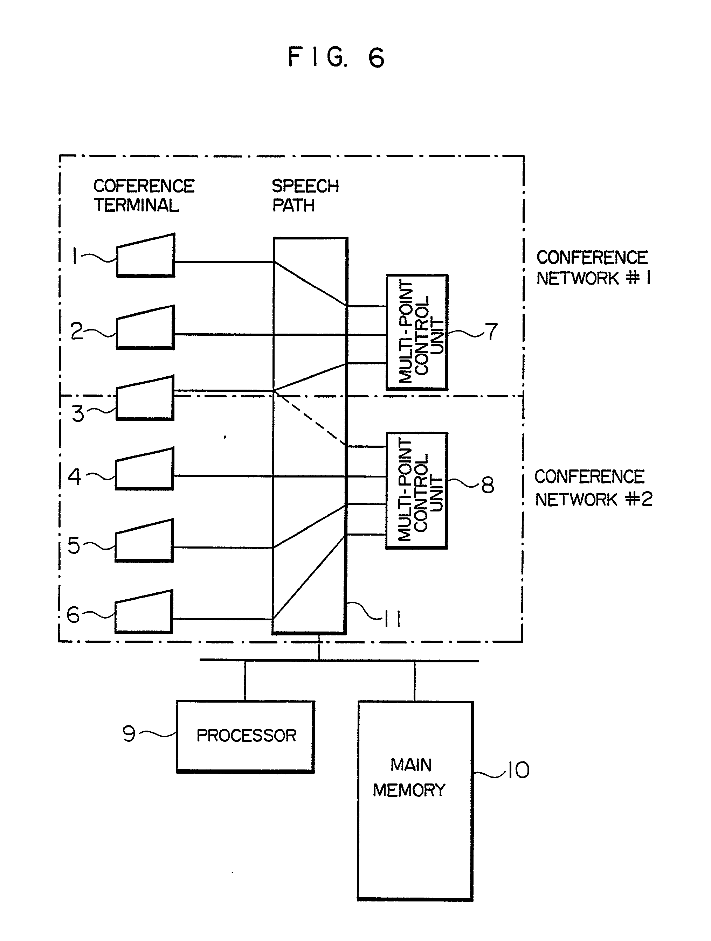

Fig. 6 shows a configuration which permits the connection to any one of a plurality of conference networks through a single port conference terminal. For example, the terminal 3 can be connected to the conference network #2. Which one of the conferences the terminal 3 is to be connected to is determined by the key entry in the terminal. For example, if the conference connection request is keyed in and the conference network #2 is designated while the terminal 3 is connected to the conference network #1, the processor 9 receives them and disconnects the communication line between the multi-point control unit 7 and the terminal 3 and connects the communication line between the multi-point control unit 8 and the terminal 3. The conference to participate to is selected by the speech path control. Thus, the multi-port conference terminals as shown in Fig. 2 are not required.

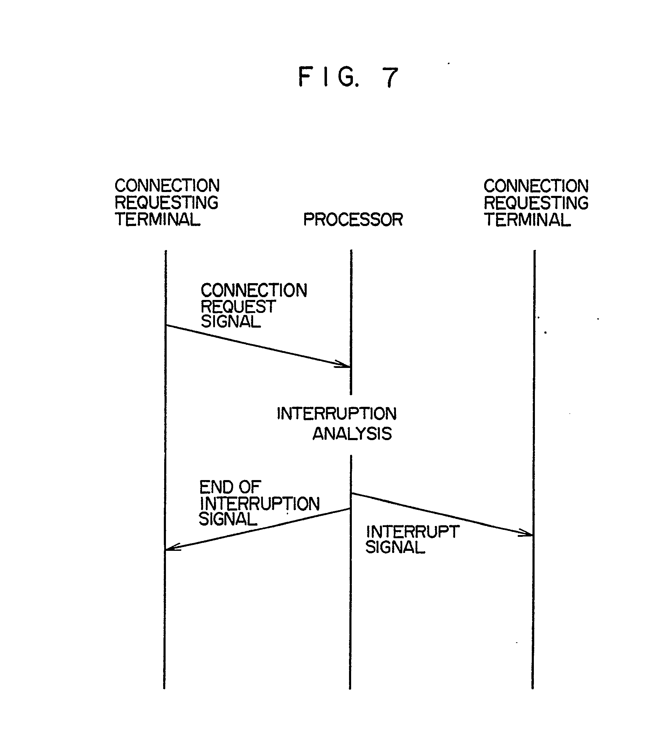

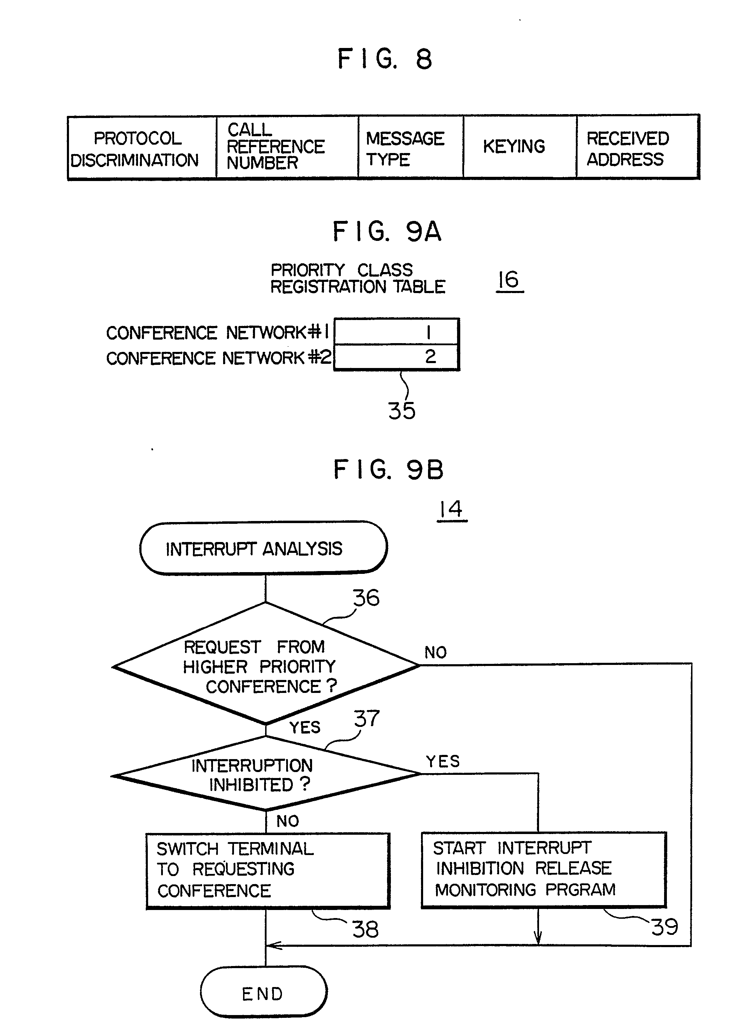

Fig. 7 shows a signal sequence chart when the connection request has been issued to the conference terminal which does not participate to the conference network of its own. For example, it is assumed that the terminal 6 in Fig. 6 issues the connection request to the terminal 3 in the network #2 to which the terminal 3 does not participate, while the conference terminal 3 is connected to the conference network #1. In the terminal 6, the connection request to the terminal 3 is keyed in so that the connection request signal is sent to the processor. Fig. 8 shows an example of the connection request signal in accordance with the CCITT Q941 (ISDN layer 3), "message type" in Fig. 8 contains information, "keying" contains a key number assigned for the connection request and "received address" contains the address of the terminal 3.

The processor 9 which has received the connection request carries out the following operation depending on the system class.

(1) Inform operation

It sends an interrupt signal to the requested terminal (see Fig. 7), and turns on a lamp or supplies an interrupt tone to inform the issuance of the connection request.

(2) Forced switching operation

It controls the speech path to disconnect the requested terminal from the multi-point control unit of the conference network to which the terminal has been connected, and connect the requested terminal to the multi-point control unit of the requesting conference network.

(3) Switching operation by priority class

The priority class is preset in priority class registration table (35 in Fig. 9A) on the main memory when calls are set, and when the connection request is issued, the priority class of the conference network of the request source is compared with the priority class of the conference network to which the non-requested terminal is connected by the priority class registration table. If the priority class of the conference network of the request source is higher, the switching operation of the item (2) above is performed. In the priority class registration table shown in Fig. 9, the priority is higher if the registered value is· larger. Thus, the priority class of the conference network, #2 is higher than that of the conference network #1, and the connection request is accepted and the switching operation is performed.

(4) Inhibition of connection switching

The switching operations of the items (2) and (3) above are inhibited by keying operation on the terminal to inhibit the interruption of the connection switching. The inhibit status is maintained until the next keying of the release of the interrupt inhibition.

An example of combination of the functions of the items (3) and (4) is explained below. When the processor receives the connection request signal, it starts the interrupt analysis program of Fig. 9B. In a step 36, whether the request is from a higher priority conference to a lower priority conference is checked. In a step 37, if the interruption is being inhibited or not is checked. If it is, the interrupt inhibition release monitoring program is started in a step 39. If the interruption is not being inhibited, the requesting conference and the requested terminal are connected in a step 38. The interrupt inhibition release monitoring program is periodically started, and when the release is detected, the switching is performed.

By providing the priority class registration table for each terminal, each terminal may individually impart the priority class of the conference.

In Fig. 6, if a chairman of the conference network #1 who sits at the terminal 1 hits an end of conference key, an end of conference signal is sent from the terminal 1 to the processor. A signal format of the signal includes a key number assigned to the end of conference corresponding to the keying shown in Fig. 8. When the processor 9 receives the end signal, it checks by the terminal class in the main memory 10 whether the signal transmitting terminal is the chairman, and if it is the chairman, it releases the conference network #1. It also controls the following operations by the system class to the terminal 3 which can participate to a plurality of conferences. (The terminal which can participate to the plurality of conferences has been registered in the terminal class.)

(1) The conference information such as conference number, name of chairman, and list of participants is displayed on the display of the terminal 3. One of the pending conferences is designated by keying in the terminal so that a conference designation signal is sent to the processor. When the processor receives it, it connects the designated conference to the terminal.

(2) It selects the highest priority one of the pending conferences which can be connected to the terminal 3 based on the priority class table on the main memory and connects the selected conference network to the terminal.

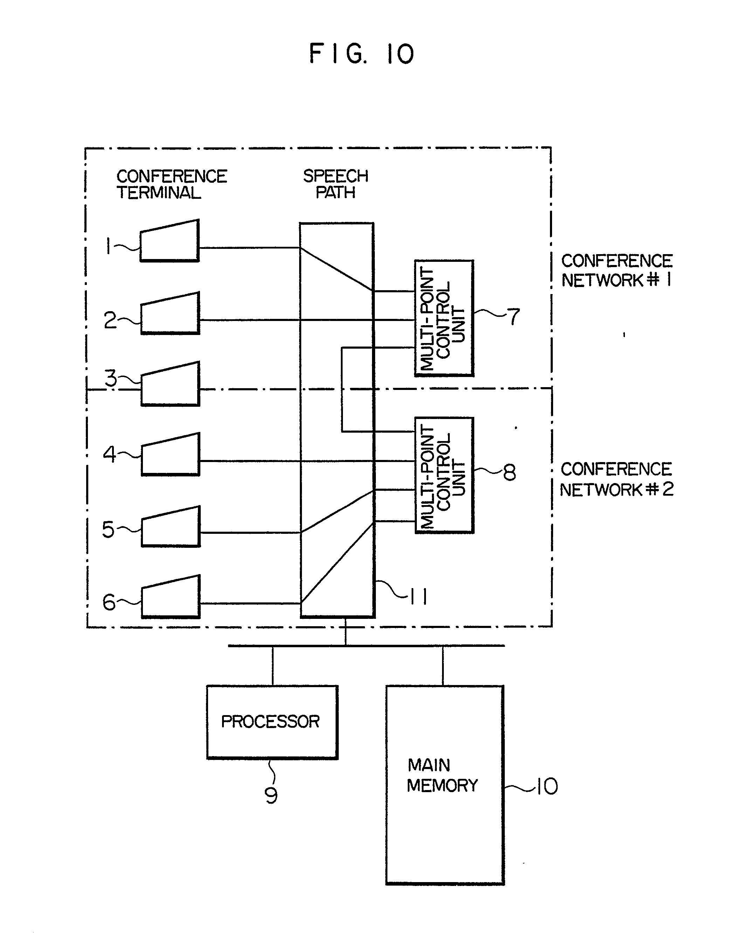

Fig. 10 shows a configuration in which the plurality of conferences in Fig. 1 or Fig. 6 are consolidated into one conference. For example, if the chairman of the conference network #1 who sits at the terminal 1 keys in a conference consolidation request and a consolidated conference number (conference network #2), a conference consolidation request signal is sent from the terminal 1 to the processor. The signal format of the signal includes a key number assigned for the conference consolidation request corresponding to the keying shown in Fig. 8. When the processor 9 receives this signal, it checks by the terminal class in the main memory 10 whether the signal transmitting terminal is the chairman, and if it is the chairman, it informs it to the chairman of the requested conference network #2 and the terminal 6. The chairman who sits at the terminal 6 keys in a permission of consolidation so that a consolidation confirmation signal (see Fig. 8) is sent to the processor. Thus, the processor connects one terminal of the multi-point control unit 7 directly to one terminal of the multi-point control unit 8 so that the conference terminals 1 - 6 belong to one conference network. Namely, the audio signals of the terminals 1 - 6 and the combined image may be outputted at each terminal.

If the chairman at the terminal 6 of the conference network #2 keys in rejection of consolidation, the processor displays the rejection of consolidation to the terminal 1 of the chairman of the requesting conference network #1.

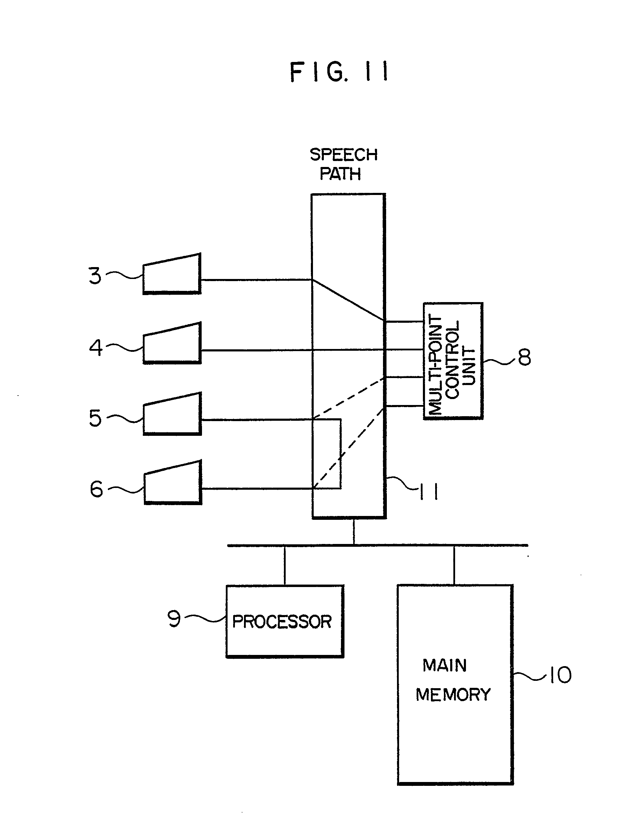

Fig. 11 shows a configuration of a local conference between the terminals 5 and 6 in the conference network #2 in Fig. 1. For example, if a participant who sits at the terminal 5 keys in a local conference request and a terminal number (terminal 6) to be requested, a local conference request signal is sent from the terminal 5 to the processor. The signal format of the signal includes a key number assigned for the local conference request corresponding to the keying shown in Fig. 5 and a requested terminal number corresponding to the received address. When the processor receives this signal, it disconnects the multi-point control unit 8 from the terminals 5 and 6 and establishes a path between the terminals 5 and 6. Thus, it does not occur that the conversation between the terminals 5 and 6 is heard by other participants, and it is possible to carry out conference in local. The terminals 3 and 4 are continued without interruption of the conference, and the images of the participants at the terminals 5 and 6 are stored in the multi-point control unit 8 when the local conference request is issued and they are distributed to the terminals 3 and 4 in the form of still image.

If the terminal 5 keys in an end of local conference request, the processor disconnect the terminal 5 from the terminal 6 and establishes paths between the terminals 5 and 6 and the multi-point control unit 8.

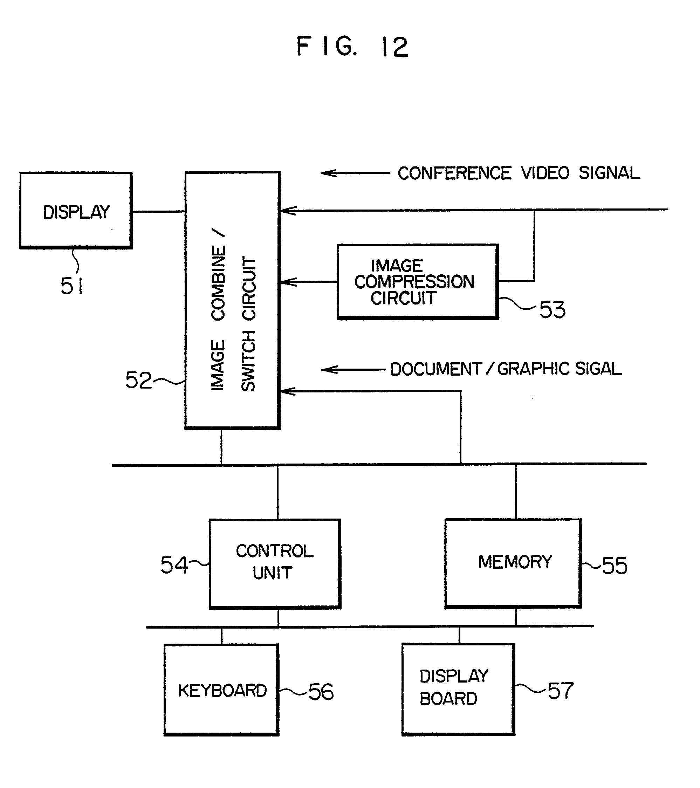

Fig. 12 shows a configuration of display output of a work station type conference terminal having an additional function of conference. It has a combination circuit for a conference video signal supplied via a line and a document/graphic data signal supplied for processing in the work station, and a switching circuit are provided. If a connection process similar to that shown in Fig. 7 takes place during the processing of the document/graphic data which is the function of the work station, and if the system class is an inform class, a lamp on the work station which indicates the interrupt request is turned on. By depressing a conference participation key on the keyboard of the work station, the work station is connected to the requesting conference network. The image mode is ① to maintain or continue the image output of document/graphics and output the conference images in a multi-window, or ② to totally switch to the conference images. The processor controls the switching circuit by the mode designated by the terminal.

In accordance with the present invention, the participation to any one of the plurality of simultaneously occuring video conferences, the simultaneous participation to a plurality of conferences and the participation to the conference during the processing of the data of the work station are permitted. Accordingly, significant improvement in the efficiency of business hour, automatic control of the conferences, individual conference during the conference and realistic feeling in the conference are provided, and the participant may set the conference environment to conform to his/her own circumstance.

## Claims

1. In a video conference network having a plurality of simultaneously communicating video conferences among video conference terminals located at two or more points, a method of video conference comprising the steps of:
selecting any one of the conferences by one video conference eterminal (1-6), and
effecting communication conference in said conference.

2. A method of video conference according to Claim 1, wherein a video signal and an audio signal are independently connected to the conference.

3. A video conference terminal used in the method of video conference according to Claim 2 comprising:
means (22) for selecting a video signal of any one of the conferences from a plurality of received conference video signals; and
means (27, 29) for selecting an audio signal of any one of the conference from a plurality of received conference audio signals.

4. In a video conference network having a plurality of simultaneously communicating video conferences among video conference terminals located at two or more points, a method of video conference for simultaneously effecting communication conference with a plurality of conference from one video conference terminal (1-6).

5. A video conference terminal used in the method of video conference according to Claim 4 comprising:
means (52) for combining video signals supplied from a plurality of conferences; and
means (27) for combining audio signals supplied from the plurality of conferences.

6. A method of video conference having the method of video conference according to Claim 1 or 2 and the method of video conference according to Claim 4, for selecting connection to any one of the conferences or to the plurality of conference by one terminal (1-6).

7. A video conference terminal used in the method of video conference according to Claim 6 comprising:
means for combining video signals supplied from the conferences;
means for switching the video signals;
means for combining the audio signals supplied from the conferences;
means for switching the audio signals; and
means for independently controlling the above-mentioned means.

8. A video conference terminal according to Claim 7 wherein a destination conference for each of the video and audio signals supplied from the terminal (1-6) is determined by corresponding one of selection modes of the video and audio signal supplied to the terminal.

9. A video conference terminal according to Claim 8, wherein the video and audio signals supplied from the terminal (1-6) are sent to a conference when the selection modes specify that the video signal and the audio signal are sent to the same conference.

10. A video conference terminal according to Claim 8 wherein a rule to determine a transmission destination conference for the signal supplied from the terminal in accordance with the selection modes of the video and audio signals supplied to the terminal are stored in a main memory (10) as a data base to enable change of the rule from each terminal.

11. In a video conference network having a plurality of simultaneously communicating video conferences among video conference terminals located at two or more points, an informing method of issuing a connection request from one conference to a conference terminal connected to a different conference to display the issuance of the connection request on the terminal (1-6).

12. An informing method according to Claim 11 wherein a lamp or a tone indicating the issuance of the connection request is lit on the conference terminal (1-6).

13. In a video conference network having a plurality of simultaneously communicating video conferences among video conference terminals located at two or more points, a method of video conference comprising the steps of:
imparting a priority order to the video conferences; and
switching the terminal (1-6) to the connection requesting conference when the priority of the connection requesting conference is higher than the priority of the conference to which the connection requested terminal supplies the video and audio signals.

14. A method of video conference having a switching function according to Claim 13, wherein connection switching is inhibited to any connection request by interrupt inhibition in the terminal (1-6).

15. A method of video conference having a connection switching inhibit function according to Claim 14, wherein the connection switching is permitted by the interrupt inhibition release operation in the terminal (1-6).

16. A video conference terminal used in the method of video conference according to Claim 14 or 15 comprising:
means (10) for informing the interrupt inhibition and the interrupt inhibition release to the network.

17. A method of video conference according to Claim 13, wherein the priority can be set from the conference terminal.

18. In a video conference network having a plurality of simultaneously communicating video conferences among video conference terminals located at two or more points, a method of video conference comprising the steps of:
displaying a connectable conference on the terminal at the end of conference to which the terminal (1-6) is connected; and
connecting the selected conference to the terminal (1-6) by a terminal operation.

19. In a video conference network having a plurality of simultaneously communicating video conferences among video conference terminals located at two or more points, a method of video conference for connecting the terminal to another conference at the end of the conference to which the terminal (1-6) is connected.

20. A method of video conference according to Claim 19, wherein said another conference is imparted with a highest priority among the conferences.

21. In a video conference network having a plurality of simultaneously communicating video conferences among video conference terminals located at two or more points, a method of video conference for consolidating the conference to which the terminal (1-6) is connected and a conference designated by the terminal into one conference by a terminal operation.

22. A method of video conference according to Claim 21 wherein the conferences are consolidated into one conference after a permission of the connection requested conference.

23. A method of video conference comprising the step of:
permitting a new and independent communication conference only between a plurality of specified conference terminals (1-6) in the conferences during the execution of conference so that the conference is executed without interruption in the remaining conference terminals.

24. A method of video conference according to Claim 23, wherein images of participants at said specified conference terminals at the time of independent communication conference are stored in a buffer of the network in a form of still image and distributed to said remaining conference terminals.

25. A method of video conference wherein a terminal for a chairman is preset from the terminals connected to one conference so that the connection request of Claim 11, the end of conference in Claim 18 and the consolidation request in Claim 21 are rendered valid only when they are from the chairman terminal.

26. In a conference network including video conference terminals located at two or more points and a data terminal having stand-alone data processing means, a method of video conference for permitting simultaneous video communication conference during the data processing by the data terminal.

27. A data terminal used in the method of video conference according to Claim 26 wherein a conference image and a data processing image are simultaneously outputted in a multi-window.

28. A data terminal used in the method of video conference according to Claim 26 comprising a switching circuit (22) for selecting one of the data processing image, the conference image and the combined image of the Claim 27.

29. In a data terminal according to Claim 27, an informing method for displaying the issuance of the connection request on the terminal (1-6) by issuing the connection request to the terminal from the conference during the data processing.

30. A data terminal according to Claim 28 comprising interrupt inhibition means (10) for Claim 14 and interrupt inhibition release means for Claim 15.

31. A video conference terminal used in the method of video conference according to Claim 1, wherein an image of participating conference is displayed as a master image in a larger area on the display, and images of other conferences are displayed as a slave image in a smaller area on the display.

# FIG. 1

CONFERENCE
TERMINAL

SPEECH
PATH

11

CONFERENCE
NETWORK #1

1

2

3

4

5

6

MULTI-POINT
CONTROL
UNIT    7

MULTI-POINT
CONTROL
UNIT    8

CONFERENCE
NETWORK #2

10

PROCESSOR

9

MAIN MEMORY

12 ── SIGNAL CONTROL
PROGRAM

13 ── COMMUNICATION PATH
CONTROL PROGRAM

14 ── INTERRUPT ANALYSIS
PROGRAM

15 ── INTERRUPT INHIBITION
RELEASE PROGRAM

16 ── PRIORITY CLASS
REGISTRATION TABLE

PROGRAM AREA

DATA
AREA

FIG. 2

# FIG. 3

| INPUT SIGNAL DESTINATION | | AUDIO OUTPUT MODE | | |
|---|---|---|---|---|
| | | COMBINE | CONFERENCE NETWORK #1 | CONFERENCE NETWORK #2 |
| VIDEO OUTPUT MODE | COMBINE | SELECT | SELECT | SELECT |
| | CONFERENCE NETWORK #1 | SELECT | CONFERENCE NETWORK #1 | SELECT |
| | CONFERENCE NETWORK #2 | SELECT | SELECT | CONFERENCE NETWORK #2 |

# FIG. 4

| VIDEO OUTPUT MODE | O |
|---|---|
| AUDIO OUTPUT MODE | 2 |

# FIG. 5

AUDIO OUTPUT MODE

VIDEO OUTPUT MODE

| O | O | O |
|---|---|---|
| O | 1 | O |
| O | O | 2 |

O  USER DESIGNATION
1~n  CONFERENCE NETWORK NUMBER
( SINGLE CONFERENCE MODE )

# F I G. 6

CONFERENCE TERMINAL

SPEECH PATH

CONFERENCE NETWORK #1

CONFERENCE NETWORK #2

1

2

3

4

5

6

7 MULTI-POINT CONTROL UNIT

8 MULTI-POINT CONTROL UNIT

11

9 PROCESSOR

10 MAIN MEMORY

# F I G. 7

CONNECTION
REQUESTING
TERMINAL

PROCESSOR

CONNECTION
REQUESTING
TERMINAL

CONNECTION
REQUEST
SIGNAL

INTERRUPTION
ANALYSIS

END OF
INTERRUPTION
SIGNAL

INTERRUPT
SIGNAL

# F I G.  8

| PROTOCOL DISCRIMINATION | CALL REFERENCE NUMBER | MESSAGE TYPE | KEYING | RECEIVED ADDRESS |
|---|---|---|---|---|
| | | | | |

# F I G. 9A

PRIORITY CLASS
REGISTRATION TABLE          16

| | |
|---|---|
| CONFERENCE NETWORK #1 | 1 |
| CONFERENCE NETWORK #2 | 2 |

35

# F I G. 9B

14

INTERRUPT ANALYSIS

36

REQUEST FROM HIGHER PRIORITY CONFERENCE ?  —NO—→

YES  37

INTERRUPTION INHIBITED ?  —YES—→

NO

SWITCH TERMINAL TO REQUESTING CONFERENCE

38

START INTERRUPT INHIBITION RELEASE MONITORING PRGRAM

39

END

# F I G. 10

# FIG. 11

# F I G. 12